# EUROPEAN PATENT SPECIFICATION

(11) **EP 2 305 894 B1**
(45) Date of publication and mention of the grant of the patent: **07.08.2013**
(21) Application number: 10151908.0
(22) Date of filing: 28.01.2010
(51) Int. Cl.: E02D 3/12, C09K 17/00

(54) **A method for consolidating soils by injection**
Verfahren zur Verfestigungvon Böden durcg Injektion
Procedée de stabilisation d'un sol par injections

(30) Priority: 29.09.2009 IT RE20090095
(43) Date of publication of application: 06.04.2011
(73) Proprietor: Kappazeta S.p.A., 43124 Parma (IT)
(72) Inventor: KAUBER, Rodolfo, 43100 Frazione Alberi (Parma) (IT)
(74) Representative: Paparo, Aldo

(56) References cited:
- EP-A1- 0 851 064
- EP-A1- 1 314 824
- US-A- 4 391 926

## Description

The invention concerns a method for consolidating soils beneath the foundations of buildings which have undergone elastic or consolidation settlement because of the appearance of cavities due to the scouring action of underground water, or due to locally circumscribed insufficient compacting of the soil which was underestimated when designing the foundation, or more in general because of geological, hydrogeological or geomechanical modifications of the foundation soil.

To remedy such drawbacks methods are known in which expanding materials, especially expanding consolidation resins (polyurethane systems), are injected through holes made in the foundation soil of existing buildings which have undergone settlement.

A method according to the preamble of claim 1 is disclosed in EP 0 851 064 A1.

The expanding resins used in consolidation processes are materials with two components, and those with a polyurethane base which are most commonly used consist of a mixture of a polyol and isocyanate, both in liquid form. Coming into contact, the two materials react to form a foam which increases in volume until it reaches its complete expansion in the atmosphere, which happens when the chemical reaction between the two components has finished.

A designer of resins is highly familiar with the rules governing the choice of the polyol or the polyols and the dosage with isocyanate which is required to obtain a given expansion in the atmosphere.

The volume attained by the material when expansion in the atmosphere has finished defines the nominal density of the resin, i.e. the specific weight of the expanded resin, which is equal to the weight of the components put in contact, divided by the total volume attained by the mass of material expanding freely in the atmosphere.

Nominal density is usually expressed in kg/m³.

If the material is forced to expand within a confined space, the volume of which is smaller than the volume the mass would exhibit if it were allowed to expand freely in the atmosphere, the material obtained will obviously be denser.

The specific weight of the expanded resin, which is the weight of the components which have been put in contact divided by the total volume attained, is defined as the final density.

Final density therefore corresponds to nominal density when the expansion takes place in the atmosphere, and the smaller the confined space within which the resin is made to expand, the greater the final density will be.

The density of the material affects its mechanical resistance, which is directly proportional to its density.

The same formulation therefore exhibits different mechanical performance characteristics according to whether it is allowed to expand freely in the atmosphere or it is confined: its mechanical resistance is directly proportional to its final density.

As an example, note that by mixing 14 litres of a certain polyol with 14 litres of isocyanate, with an average specific weight of 1.08 kg/dm³, and allowing the mixture to expand freely in the atmosphere, a cubic metre of solid material is obtained which exhibits a density of around 30 kg/m³. The mixture of components has thus expanded by approximately 36 times the initial volume.

By confining the expansion of the same components within an enclosed space with a volume of 0.25 m³, 250 litres of expanded and hardened material are obtained, with a density of approximately 120 kg/m³. In this case, the mixture of components has expanded by around 9 times the initial volume.

Even though the components are the same, the first material's mechanical crush resistance is approximately 2.5 kg/cm², while that of the second material is between 16 and 20 kg/cm².

Intuitively, if a mixture with two components is obliged to expand, not in the open air, but within a reduced volume, the tendency of the mixture which is confined within the reduced volume to expand will give rise to thrust in all directions until the chemical reaction generating the foam has finished.

The resins used in consolidation processes are primarily characterised by their nominal density.

Resin designers therefore have the means to determine the nominal density of a resin, by appropriately choosing the starting materials and their dosage. This is the most significant parameter characterising the various known methods of consolidation, and distinguishes them from one another. Choosing the characteristics of the resin is essential for the success of the consolidation process, the success of which also depends on the characteristics of the soil which are not always predictable beforehand.

In fact the characteristics of the soil exert an influence over the ease with which the resin penetrates into the soil, or in other words, over the resistance that the soil opposes to penetration by the resin.

The prior art privileges the use of low density resins which make it possible to reduce costs and times, and to control the consolidation process better.

If the nature of the soil were homogeneous, it would usually be convenient to choose a low density resin.

If instead, as is usually the case, the soil is not homogeneous, i.e. exhibits bordering portions which display a greatly differing resistance to receiving the resin, for example because of the presence of cavities due to a scouring action caused by a leak in a buried pipe, or to the presence of concretions which create underground bridges delimiting areas with a very low soil density, or even hollow areas, the choice of resin, in the prior art, is the result of a compromise.

The aim of the injections is to penetrate an area or volume of the soil, in which the expanding resin creates its own space and compacts the surrounding foundation soil, exerting thrust in all directions. Upward thrust acts upon the foundation, to the point of obtaining a very real reactivation of a foundation which had settled and was no longer capable of supporting the building, which in the meantime had found a provisional equilibrium.

The resin's task, in addition to creating isotropic thrust in the soil during the expansion phase, is to make available a solid volume of hardened resin having certain mechanical characteristics: the less the resin expands in the space within which it is confined, the more elevated these characteristics will be.

In inhomogeneous soils, i.e. soils which exhibit bordering portions with very different resistances to receiving the resin, the expanding resin encounters differentiated resistance to its expansion, and therefore exerts varying thrust. Further, under the described conditions, once the resin has hardened, it exhibits varying density and varying mechanical resistance from one zone to another.

For example, if the expanding material is injected into a homogeneous soil, the material will encounter a certain resistance to expansion and will attain a certain local density.

The hardened material will exhibit sufficient mechanical resistance to confine the expansion of the resin which is progressively being injected and, when the injection operation has finished, to support the overlying building.

If on the other hand the soil is inhomogeneous, when the resin encounters less resistance it will expand more easily, hardening at a lower density and thus opposing less mechanical resistance to the expansion of resin which is injected at a later stage.

If the lower resistance encountered by the resin were due to an actual cavity, the resin could expand to reach the nominal volume and density in this zone. If the mechanical resistance offered to the expansion of the resin which is injected at a later stage is insufficient to contain the thrust during expansion, the volume of the resin with the lower density tends to crumble, thus adding a further cause of soil instability.

When the abovementioned drawbacks are predictable, the prior art suggests modifying the following parameters each time:
- frequency and depth of injection with respect to the extension and the embedment depth of the foundation structures;
- nominal density (in free expansion) of the resin used.

Further, recourse is made to systems which control the quantity used, to continuous monitoring of the structure, and to examinations before and after intervention on the soil.

The results obtained from known systems are always the result of a compromise, and are therefore not always satisfactory.

The aim of the invention is to make available a procedure for consolidating foundation soils by injecting expandable resins which eliminate the abovementioned drawbacks within the ambit of a simple and economical solution.

The invention achieves the aim by injecting at least two resins into the soil, each having a different nominal density, the resins being alternately injected into the same hole in function of the flow rate through the injection nozzle, or in function of the instantaneous flow rate of the resin injected after mixing the components, which depends as we have seen, on the resistance encountered by the resin's penetration into the ground and expansion.

One of the two resins will have low nominal density, and will therefore be capable of exerting a significant consolidation thrust.

If thanks to the characteristics of the soil the resin is appropriately confined, it will harden at a much higher density than nominal density and will exhibit mechanical resistance which is sufficient not only to confine the subsequently injected resin, but also to collaborate effectively in supporting the building.

If during the injection operation the resin encounters a much less dense volume of soil, or even a cavity, it will penetrate with greater ease, and the pressure at the nozzle will correspondingly diminish, while the flow velocity will increase.

The tendentially instantaneous reduction of pressure at the nozzle is therefore an indicator of changed conditions of the soil within which the resin must expand, i.e. it indicates that the resin has encountered a less dense volume of soil, or even a cavity.

In the method of the invention, injection of the low density resin is interrupted under these conditions, with injection of a high density resin commencing instantaneously.

The high density resin will be able to expand up to values which are possibly even close to the nominal value, and although generating modest isotropic thrust, it will solidify with mechanical resistance values which are sufficient to contain the resin which is injected subsequently.

Once the volume of soil with low density and low resistance to penetration has been saturated, the pressure at the nozzle of the injected resin will tend to increase and injection can be once more switched to the resin with lower nominal density.

The resin with lower nominal density will be confined by the previously injected resin, which will have hardened with sufficient mechanical resistance to contain the resin which is injected subsequently.

Low density resins which are suitable for implementing the invention are chosen from the following:
BAYER-BAYTHERM 55620/AO polyol with DESMODUR ISL isocyanate
DOW - VORACOR CR 919 polyol with VORACOR CR 761 isocynate

These are characterised by a nominal density of around 30 kg/m³, a suitable density being between 24 kg/m³ and 36 kg/m³.

In soil these resins exert isotropic thrust of at least 12 kg/cm².

Further, once hardened in the absence of containment, these resins exhibit mechanical crush resistance of around 2.5 kg/cm².

The high density resins which are suitable for implementing the invention are chosen from the following:
BAYER - BAYTHERM 31 BD11/GO polyol with DESMODUR ISL isocyanate
DOW - VORACOR CS 617 polyol with VORACOR CS 679 isocynate

These are characterised by a nominal density of between 160 kg/m³ and 230 kg/m³, a suitable density being for example 220 kg/m³, and they expand by around 5 times the initial volume.

Injected into the foundation soil, these resins exert a very modest isotropic thrust and once consolidated, even in the absence of resistance or containment, they exhibit a minimum resistance to compression which is around 30 kg_{/}cm².

The advantages and characteristics of the invention will emerge from the following non-limiting example, with the aid of the appended figures of the drawings.

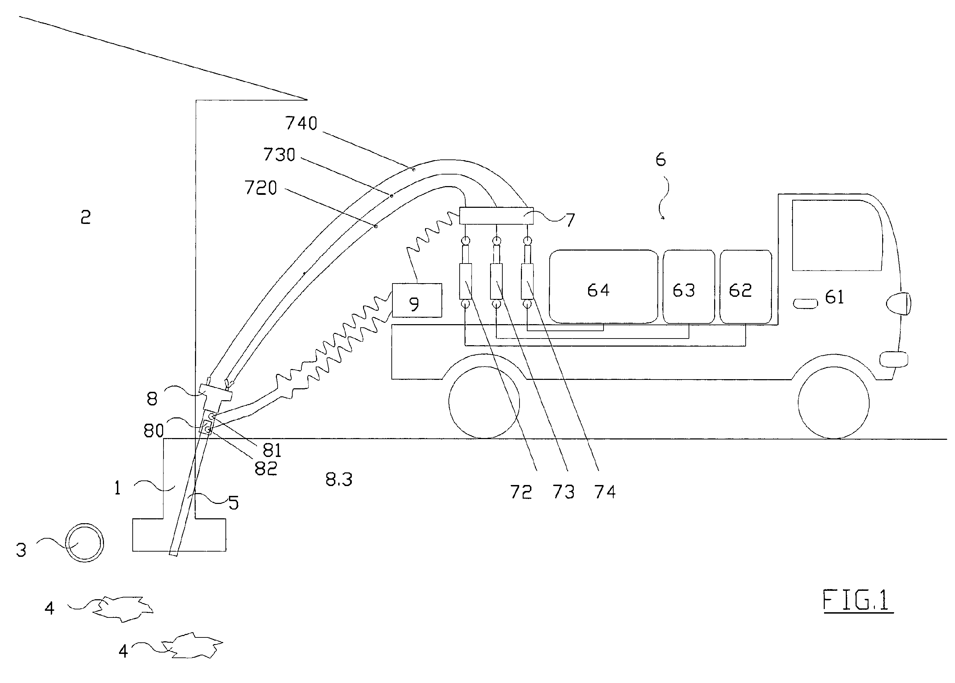

Figure 1 shows a general diagram of the plant, parts thereof being indicated schematically.

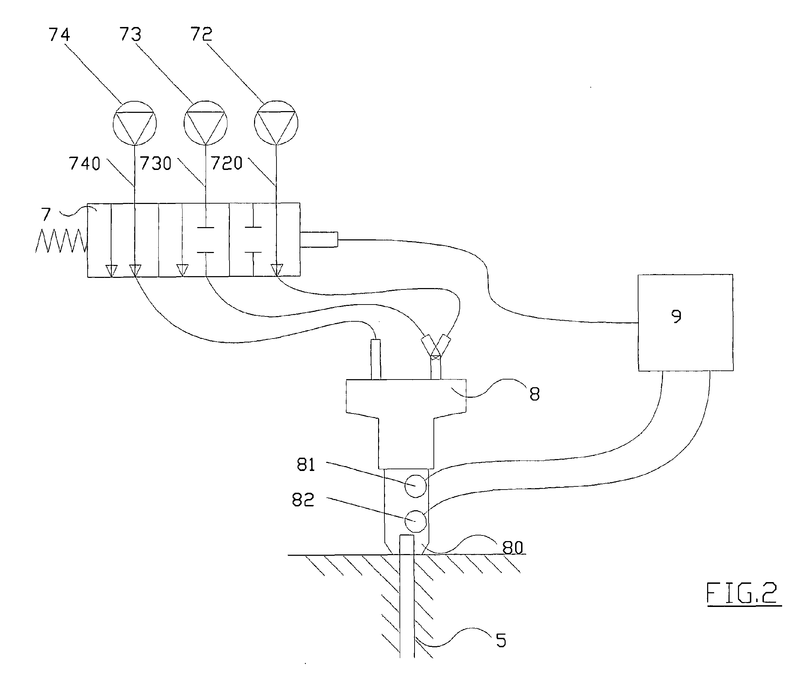

Figure 2 shows a schematic hydraulic diagram of the plant.

The example which follows refers to the consolidation of the foundation 1 of a building 2 resting on a clayey soil in which a water supply pipe 3 is interred. The soil exhibits waterlogged pockets 4 which are in part caused by rainwater infiltrations, and in part by leaks from the pipe 3.

The consolidation operation includes making a hole 5 with a diameter of around 25 mm in the building through the foundation, the hole being positioned in such a way as to descend below the foundation 1 to a vertical distance of between 10 and 20 cm from the foundation 1.

An apparatus 6 for performing the consolidation operation is arranged nearby, conveniently situated on a motor truck 61 or other self-propelled means.

The apparatus 6 comprises a first tank 62 containing a high nominal density polyol, such as Bayer Baydur 31BD11/D, a second tank 63 containing a low nominal density polyol, such as Bayer Baytherm 55620/AO, while a third tank contains isocyanate Bayer Desmodur ISL.

Each of the tanks is connected to a specific pump, respectively the pumps 72, 73, and 74.

The output conduits 720, 730 and 740 are connected to the mixing chamber 8, with the interposition of a three-way valve 7.

The three-way valve 7 is shown arranged at a distance from the mixing chamber, but can conveniently be integrated into it.

This makes switching between the two resins immediate and makes it possible to keep both polyols pressurised until they are immediately upstream of the mixing chamber 8.

The chamber 8 is provided with a nozzle 80 which injects the liquid material into the hole 5.

The nozzle 80 is of a usual, known type which is familiar to persons skilled in the art, and will not be described in detail.

The nozzle 80 comprises means 81 which measure the pressure existing in the nozzle, and/or 82 measure the flow rate of the liquid out of the nozzle 80. A processor 9 receives the signals from the means 81 and/or 82 and according to the signals received commands switching of the valve 7 in such a way that the polyols from the tanks 62 or 63 and the isocyanate from the tank 64 reach the mixing chamber 8.

Mixing the polyol of the tank 62 with the isocyanate of the tank 64 gives rise to an expanding resin A with nominal density of approximately 220 kg/cm², while mixing the polyol of the tank 63 with the isocyanate of the tank 64 gives rise to an expanding resin B with nominal density of 30 kg/cm².

The consolidation process commences by injecting the resin A which is high density, and therefore exhibits elevated mechanical crush resistance even in the absence of containment.

At the beginning of the injection operation, the nozzle pressure which the means 81 detects settles around a certain value, which depends on the resistance of the soil situated at the exit of the hole 5 to penetration by the resin.

Persistence of the initial pressure condition means that the injected resin encounters cavities or conditions of discontinuity inside the soil of a nature which do not provide sufficient containment; under such conditions, the high density resin prevalently performs its filling function, generating material with adequate mechanical resistance without however generating the desired isotropic thrust.

An increase in pressure signals that the injected material has filled the empty spaces and has, through the overall pressure applied, initially compacted the compressible soil.

Via the processor 9, the increase in pressure causes instant switching of the valve 7 and thus initiates injection of the low density resin B.

The injection of the resin B, finding that the dimensions of the space for expansion have been reduced by the presence of the resin A, generates its characteristically strong isotropic consolidation thrust.

This thrust is supported both by the soil being consolidated, and by the resin A which exhibits elevated and sufficient mechanical characteristics.

If the conditions of high pressure persist, the isotropic thrust will cause the building to rise as the final outcome of the completed consolidation operation. At any time during the injection operation the generated pressures may cause rupture of inter-cavity diaphragms, thus causing an instantaneous fall in pressure, which via the processor 9 causes the valve 7 to switch so that that injection recommences with the high density resin A, which is suitable for filling the cavities encountered by the penetration of the resin, which hardens with elevated mechanical resistance values; the cycle is repeated until the desired outcome is definitively achieved.

In the example the pressure value is taken as the reference value for activating the switch valve, but in the same example taking the flow velocity as the reference value is equally valid, in which case the magnitudes will have to be inverted (greater flow corresponds to lower pressure).

The example concerns the injection of two resins with different nominal density, but is equally applicable to the injection of more than two resins. Further, in the example the method commences with injection of the high density resin, but it can equally be implemented by starting with injection of low density resin.

In this case, which is preferable whenever the soil is substantially homogeneous while exhibiting the presence of cavities or zones with a lower density, injection of the low density resin gives rise to a certain pressure, or flow rate, which persists until the resin encounters a cavity.

At this point the sudden reduction of the injection pressure, and/or respectively the sudden increase of the flow velocity, causes the switch to injection of the high density resin, which proceeds to fill the cavity, thus creating a hardened mass with elevated mechanical characteristics.

Filling the cavity causes a further switch to the low density resin and the cycle is repeated.

In the example two different polyols are used, which react with the same isocyanate and which have the same volumetric mixing ratio.

In the case where one wishes to use two polyols which use dedicated isocynates that differ from each other, or that have different mixing ratios, the tanks and the pumps will number four instead of three, and the valve will be a four-way instead of three-way valve.

## Claims

1. A method for consolidating soils by injecting into at least one hole thereof a bicomponent resin (A or B) derived from a reaction between polyols and isocynate, **characterised in that** it includes continuous alternating injection in the same hole of at least two of said bicomponent resins A and B exhibiting different nominal densities, alternation between the injected resins being a function of a variation of injection pressure, and/or of flow rate of the injected resin through a nozzle.

2. The method of claim 1 **characterised in that** the high density resin exhibits nominal density of between 160 kg/m³ and 230 kg/m³, preferably around 220 kg/m³.

3. The method of claim 2 **characterised in that** the high density resin exerts an isotropic thrust of less than 3 kg/cm² on the soil.

4. The method of claim 2 **characterised in that** the high density resin exhibits a mechanical crush resistance of at least 30 kg/cm².

5. The method of claim 2 **characterised in that** the high density resins which are suitable for implementing the invention are chosen from the following:
BAYER - BAYTHERM 31 BD11/GO polyol with DESMODUR ISL isocyanate DOW - VORACOR CS 617 polyol with VORACOR CS 679 isocynate

6. The method of claim 1 **characterised in that** the low density resin exhibits a nominal density of between 24 kg/m³ and 36 kg/m³, preferably of 30 kg/m³.

7. The method of claim 6 **characterised in that** the low density resin exerts an isotropic thrust of at least 12 kg/cm² on the soil.

8. The method of claim 6 **characterised in that** the low density resin, if not contained in volume, exhibits mechanical crush resistance of around 2.5 kg/cm².

9. The method of claim 6 **characterised in that** the low density resin, if contained in volume, exhibits mechanical crush resistance of up to 30 kg/cm².

10. The method of claim 6 **characterised in that** the low density resins which are suitable for implementing the invention are chosen from the following:
BAYER -BAYTHERM 55620/AO polyol with DESMODUR ISL isocyanate DOW - VORACOR CR 919 polyol with VORACOR CR 761 isocynate

## Patentansprüche

1. Verfahren zur Verfestigung von Böden durch Injektion eines Zweikomponentenkunstharzes (A oder B), abgeleitet aus einer Reaktion zwischen Polyol und Isocyanat, in mindestens ein Loch, **dadurch gekennzeichnet, dass** es die kontinuierlich abwechselnde Injektion in dasselbe Loch von mindestens zwei der Kunstharzkomponenten A und B, aufweisend unterschiedliche Nenndichten, umfasst, wobei das Abwechseln zwischen den injizierten Kunstharzen eine Funktion einer Änderung des Injektionsdrucks und/oder der Durchflussmenge des injizierten Kunstharzes durch eine Düse ist.

2. Verfahren nach Anspruch 1, **dadurch gekennzeichnet, dass** das hochdichte Kunstharz eine Nenndichte zwischen 160 kg/m³ und 230 kg/m³, vorzugsweise etwa 220 kg/m³, aufweist.

3. Verfahren nach Anspruch 2, **dadurch gekennzeichnet, dass** das hochdichte Kunstharz einen isotropen Druck von weniger als 3 kg/cm² auf den Boden ausübt.

4. Verfahren nach Anspruch 2, **dadurch gekennzeichnet, dass** das hochdichte Kunstharz eine mechanische Zerdrückfestigkeit von mindestens 30 kg/cm² aufweist.

5. Verfahren nach Anspruch 2, **dadurch gekennzeichnet, dass** die hochdichten Kunstharze, die für die Implementierung der Erfindung geeignet sind, aus folgenden ausgewählt werden:
Polyol BAYER BAYTHERM 31 BD11/GO mit Isocyanat DESMODUR ISL, Polyol DOW-VORACOR CS 617 mit Isocyanat VORACOR CS 679.

6. Verfahren nach Anspruch 1, **dadurch gekennzeichnet, dass** das Kunstharz mit geringer Dichte eine Nenndichte zwischen 24 kg/m³ und 36 kg/m³, vorzugsweise 30 kg/m³, aufweist.

7. Verfahren nach Anspruch 6, **dadurch gekennzeichnet, dass** das Kunstharz mit geringer Dichte einen isotropen Druck von mindestens 12 kg/cm² auf den Boden ausübt.

8. Verfahren nach Anspruch 6, **dadurch gekennzeichnet, dass** das Kunstharz mit geringer Dichte, falls es nicht im Volumen enthalten ist, eine mechanische Zerdrückfestigkeit von zirka 2,5 kg/cm² aufweist.

9. Verfahren nach Anspruch 6, **dadurch gekennzeichnet, dass** das Kunstharz mit geringer Dichte, falls es im Volumen enthalten ist, eine mechanische Zerdrückfestigkeit bis 30 kg/cm² aufweist.

10. Verfahren nach Anspruch 6, **dadurch gekennzeichnet, dass** die Kunstharze mit geringer Dichte, die für die Implementierung der Erfindung geeignet sind, aus folgenden ausgewählt werden:
Polyol BAYER BAYTHERM 55620/AO mit Isocyanat DESMODUR ISL, Polyol DOW-VORACOR CR 919 mit Isocyanat VORACOR CS 761.

## Revendications

1. Procédé de stabilisation d'un sol par injection à l'intérieur d'au moins un orifice d'une résine bi-composants (A ou B) dérivant d'une réaction entre polyols et isocyanates, **caractérisé en ce qu'**il inclut l'injection continue en alternance dans le même orifice d'au moins deux desdites résines bi-composants A et B présentant des densités nominales différentes, l'alternance entre les résines injectées étant fonction d'une variation de la pression d'injection, et/ou du débit de la résine injectée par une buse.

2. Procédé selon la revendication 1, **caractérisé en ce que** la résine à haute densité présente une densité nominale comprise entre 160 kg/m3 et 230 kg/m3, de préférence autour de 220 kg/m3.

3. Procédé selon la revendication 2, **caractérisé en ce que** la résine à haute densité exerce une poussée isotrope de moins de 3 kg/cm2 sur le sol.

4. Procédé selon la revendication 2, **caractérisé en ce que** la résine à haute densité présente une résistance mécanique à la compression d'au moins 30 kg/cm2.

5. Procédé selon la revendication 2, **caractérisé en ce que** les résines à haute densité adaptées à l'application de l'invention sont choisies à partir de celles indiquées ci-après :
BAYER - polyol BAYTHERM 31 BD11/GO avec isocyanate DESMODUR ISL, DOW - polyol VORACOR CS 617 avec isocyanate VORACOR CS 679.

6. Procédé selon la revendication 1, **caractérisé en ce que** la résine à faible densité présente une densité nominale comprise entre 24 kg/m3 et 36 kg/m3, de préférence égale à 30 kg/m3.

7. Procédé selon la revendication 6, **caractérisé en ce que** la résine à faible densité exerce une poussée isotrope d'au moins 12 kg/cm2 sur le sol.

8. Procédé selon la revendication 6, **caractérisé en ce que** la résine à faible densité, lorsqu'elle n'est pas contenue en volume, présente une résistance mécanique à la compression d'environ 2,5 kg/cm2.

9. Procédé selon la revendication 6, **caractérisé en ce que** la résine à faible densité, lorsqu'elle est contenue en volume, présente une résistance mécanique à la compression de plus de 30 kg/cm2.

10. Procédé selon la revendication 6, **caractérisé en ce que** les résines à faible densité adaptées à l'application de l'invention sont choisies à partir de celles indiquées ci-après .
- polyol BAYTHERM 55620/AO avec isocyanate DESMODUR ISL, DOW - polyol VORACOR CR 919 avec isocyanate VORACOR CR 761.
